(19) Europäisches Patentamt / European Patent Office / Office européen des brevets

(11) **EP 2 614 573 B1**

(12) **EUROPÄISCHE PATENTSCHRIFT**

(45) Veröffentlichungstag und Bekanntmachung des Hinweises auf die Patenterteilung:
**18.11.2015 Patentblatt 2015/47**

(21) Anmeldenummer: **11767189.1**

(22) Anmeldetag: **02.09.2011**

(51) Int Cl.:
*H02J 3/38* (2006.01)   *H02M 7/44* (2006.01)

(86) Internationale Anmeldenummer:
**PCT/EP2011/065230**

(87) Internationale Veröffentlichungsnummer:
**WO 2012/031992 (15.03.2012 Gazette 2012/11)**

(54) **VERFAHREN ZUR STABILISIERUNG EINES ELEKTRISCHEN VERSORGUNGSNETZES**

METHOD FOR STABILIZING AN ELECTRIC GRID

PROCÉDÉ DE STABILISATION D'UN RÉSEAU D'ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2010 DE 102010037340**

(43) Veröffentlichungstag der Anmeldung:
**17.07.2013 Patentblatt 2013/29**

(73) Patentinhaber: **SMA Solar Technology AG 34266 Niestetal (DE)**

(72) Erfinder:
- **DE BRABANDERE, Karel**
  **2300 Turnhout (BE)**
- **SAKSCHEWSKI, Vitali**
  **34277 Fuldabrück (DE)**
- **CRAMER, Lars**
  **34128 Kassel (DE)**
- **FAWZY, Yehia Tarek**
  **34125 Kassel (DE)**
- **STEVENS, Stijn**
  **34355 Benterode (DE)**
- **PREMM. Daniel**
  **34266 Kaufungen (DE)**

(74) Vertreter: **Lahnor, Peter SMA Solar Technology AG Abt. T TC IP Sonnenallee 1 34266 Niestetal (DE)**

(56) Entgegenhaltungen:

- VECHIU I ET AL: "Transient Operation of a Four-Leg Inverter for Autonomous Applications With Unbalanced Load", IEEE TRANSACTIONS ON POWER ELECTRONICS, IEEE SERVICE CENTER, PISCATAWAY, NJ, US, Bd. 25, Nr. 2, 1. Februar 2010 (2010-02-01), Seiten 399-407, XP011294957, ISSN: 0885-8993
- ELOY-GARCIÂ'A J ET AL: "Direct power control of voltage source inverters with unbalanced grid voltages", THE INSTITUTION OF ENGINEERING AND TECHNOLOGY. JOURNAL,, Bd. 1, Nr. 3, 4. September 2008 (2008-09-04), Seiten 395-407, XP006031610, ISSN: 1755-4543, DOI: 10.1049/IET-PEL:20070042
- RODRIGUEZ P ET AL: "Reactive Power Control for Improving Wind Turbine System Behavior Under Grid Faults", IEEE TRANSACTIONS ON POWER ELECTRONICS, IEEE SERVICE CENTER, PISCATAWAY, NJ, US, Bd. 24, Nr. 7, 1. Juli 2009 (2009-07-01), Seiten 1798-1801, XP011271214, ISSN: 0885-8993, DOI: 10.1109/TPEL. 2009.2014650
- LUNA A ET AL: "Control strategies for DFIG wind turbines under grid fault conditions", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3. November 2009 (2009-11-03), Seiten 3886-3891, XP031629978, ISBN: 978-1-4244-4648-3

- **SONG XIAN-WEN ET AL: "Dual reference frame scheme for distributed generation grid-connected inverter under unbalanced grid voltage conditions", POWER ELECTRONICS SPECIALISTS CONFERENCE, 2008. PESC 2008. IEEE, IEEE, PISCATAWAY, NJ, USA, 15. Juni 2008 (2008-06-15), Seiten 4552-4555, XP031300669, ISBN: 978-1-4244-1667-7**

**Beschreibung**

Die Erfindung betrifft ein Verfahren zur Stabilisierung eines elektrischen Versorgungsnetzes, beispielsweise eines öffentlichen elektrischen Netzes zur Versorgung von Verbrauchern mit elektrischer Energie.

Unter einer "Stabilität eines elektrischen Netzes" wird ein Zustand verstanden, in dem sich bestimmte, die vom Netz bereitgestellte Spannungen charakterisierende Werte (beispielsweise eine Spannungshöhe, eine Phasenlage und/oder eine Frequenz) innerhalb eines - ggf. von einem Netz- oder Anlagenbetreiber - festgelegten Bereiches befinden.

Diese im vorstehenden Absatz definierte "Stabilität eines elektrischen Netzes" kann durch Abweichungen von einem definierten gewünschten Zustand, auch Optimalzustand genannt, beeinträchtigt werden, wobei der gewünschte Zustand durch festgelegte Sollwerte, z.B. für die zuvor genannten charakterisierenden Werte, beschrieben werden kann. Auch Netzfehler stellen solche Abweichungen dar, da sie einen Netzzustand verursachen, in dem ein oder mehrere der vorstehend bezeichneten Werte von den Sollwerten abweichen.

Die in Rede stehenden Netze zur Versorgung von Verbrauchern mit elektrischer Energie weisen in der Regel verschiedene Netzebenen (auch als Versorgungsebenen bezeichnet) auf: Eine Niederspannungsebene (NS) eine Mittelspannungsebene (MS) und eine Hochspannungsebene (HS). Vereinfacht ausgedrückt handelt es sich um einzelne Netze mit verschiedenen Spannungsbereichen, die mittels Transformatoreinrichtungen gekoppelt sind.

Netzfehler - und allgemeiner Abweichungen vom Optimalzustand - können auf jeder Netz- bzw. Versorgungsebene auftreten. Zur Unterscheidung einzelner Abweichungstypen bzw. Netzfehler können diese in verschiedene Klassen eingeteilt werden, insbesondere zur Unterscheidung zwischen symmetrischen (beispielsweise ein dreiphasiger Spannungseinbruch in einem Drei-Phasensystem) und asymmetrischen Abweichungen bzw. Fehlern (beispielsweise ein einphasiger Spannungseinbruch oder Kurzschluss in einem mehrphasigen System, ein mehrphasiger Kurzschluss gegen Erde (PE-Potential) oder ein Kurzschluss zwischen einzelnen Phasen).

In zahlreichen Ländern existieren Netzrichtlinien für verschiedene Netzebenen. In diesen Netzrichtlinien sind Anforderungen für einspeisende Erzeugungsanlagen (beispielsweise für Wechselrichter) definiert, beispielsweise Anforderungen, die ein bestimmtes Verhalten einer einspeisenden Erzeugungsanlage bei einem bestimmten auftretenden Netzfehler vorschreiben, insbesondere mit dem Ziel, das Netz zu stützen.

Die dezentralen Energieerzeuger können im Falle einer Abweichung vom Optimalzustand und insbesondere im Falle eines Netzfehlers mit dem Netz verbunden bleiben und durch eine gezielte Einspeisung von Wirk- und Blindleistung zur Stützung bzw. Stabilisierung des Netzes beitragen. Dieses wird, wenn die stützende Einspeisung im Falle eines starken Spannungseinbruches nur kurzzeitig und sehr dynamisch (z.B. im Millisekundenbereich) erfolgt, auch als "Dynamische Netzstützung", "Dynamic Grid Support" (DGS) oder auch "Fault Ride Through" (FRT) bezeichnet. Die konkreten Ausführungsformen dieser Anforderungen in verschiedenen Ländern oder Regionen oder von verschiedenen Netzbetreibern unterscheiden sich teilweise in hohem Maße und widersprechen sich teilweise sogar. Ein Grund hierfür sind unterschiedliche Ansichten darüber, wie eine optimale Netzstützung aussehen könnte.

Eine Übereinstimmung zwischen einer Anzahl von Netzrichtlinien besteht darin, einen durch die Erzeugungsanlage zu stützenden Fehlerfall als zeitlich kurz zu definieren (deutlich kürzer als eine Sekunde). Eine zeitlich andauernde Asymmetrie, beispielsweise durch eine verhältnismäßig große Last an einer einzelnen Phase eines Mehrphasensystems, wird in gewissen Grenzen zugelassen und wird insbesondere auf der Niederspannungsebene (NS) nicht als Fehler angesehen. Dennoch stellt auch ein solcher Fall eine Abweichung vom Optimalzustand dar, die sich zu einem Fehler ausweiten kann, wenn die das Netz charakterisierenden Werte zu stark von den Sollwerten abweichen. Eine Stabilisierung des Netzes auch gegenüber solchen Abweichungen ist daher wünschenswert und wird als "statische Netzstützung" bezeichnet.

Eine weitere Übereinstimmung zwischen einer Anzahl von Netzrichtlinien besteht darin, dass Kennlinien vorgeschrieben werden, die einzuspeisende Kompensationsströme als Funktion der Abweichungen der aktuellen Netzspannungen von Referenzwerten definieren. Diese sogenannte Blindstromstatiken enthalten teilweise Totbänder, innerhalb derer keine Einspeisung von Kompensationsströmen notwendig ist.

Zur Analyse eines Netzzustandes werden die Spannungen der einzelnen Phasen gemessen (d.h. die relevanten Werte, welche die Spannung beschreiben - Spannungswert, Phasenlage, ggf. Frequenz - werden messtechnisch erfasst) und nach dem Fachmann bekannten mathematischen Verfahren (beispielsweise mittels bekannter Matrizenoperationen) in symmetrische Komponenten zerlegt.

Als ein Ergebnis dieser mathematischen Berechnung erhält man Informationen über ein sog. "Mitsystem", ein sog. "Gegensystem" und ggf. über ein sog. "Nullsystem". Diese Begriffe und ihre beispielhafte Berechnung über eine Fortescue-Matrix werden beispielsweise in einschlägigen Lehrbüchern näher erläutert (siehe z.B. Heuck et.al. "Elektrische Energieversorgung", Vieweg Verlag, 7. Aufl. 2007, Kap. 9 & 10)) und sind dem Fachmann bekannt.

Befindet sich ein Netz in einem fehlerlosen Zustand und sind keine asymmetrischen Lasten vorhanden, so ergeben die Berechnungen kein Gegensystem. Ein rein symmetrischer Fehler bewirkt ausschließlich eine Änderung der Amplituden des Mitsystems. Ein asymmetrischer Fehler und/oder eine asymmetrische Lastverteilung hingegen verursacht das Auftreten von Gegensystemkomponenten. In einem Dreileiternetz ist grundsätzlich kein Nullsystem vorhanden. Diese Grundlagen sind dem Fachmann ebenfalls bekannt.

Auch Einrichtungen bzw. Verfahren zur Netzstützung bzw. Netzstabilisierung sind an sich bekannt. So werden klassische "Netzstützer" als Synchronmaschinen (SM) ausgeführt. Synchronmaschinen erzeugen auf Grund ihrer Bauweise immer dann Kompensationsströme, wenn ein Gegensystem existiert und sind daher dazu in der Lage, netzstützend bzw. netzstabilisierend zu wirken, indem diese bei - z.B. durch Netzfehler verursachten - Netzspannungsänderungen Kompensationsströme erzeugen, die der Änderung entgegen wirken und damit den Netzfehler dämpfen.

Aus der DE 10 2007 005 165 A1 ist ein Verfahren für Windenergieanlagen (WEA) bekannt, welches im Falle eines Netzfehlers asymmetrische Kompensationsströme einspeist. Neben der Netzstützung ist hier das Hauptziel, die Auswirkungen des Netzfehlers auf den Betrieb der WEA "abzumildern", so dass diese weiter betrieben werden kann und sich nicht vom Netz trennen muss. Das vorgeschlagene Verfahren umfasst im Wesentlichen folgende Schritte:

- Verfolgen einer Mitsystem- und Gegensystemkomponente des Netzzustandes
- Ausrichten der Gegensystemkomponente zur Kompensation von Asymmetrien (asymmetrische Netzfehler)
- Einspeisung von Kompensationsströmen

Dieses Verfahren ist neben dem Anlagenschutz auf die Stützung der Mittelspannungsebene ausgelegt, wobei die WEA in der Regel nicht in ein Niederspannungsnetz zur Versorgung von elektrischen Verbrauchern eingebunden ist und daher die Anwesenheit von mindestens einem Transformator zwischen einem Fehlerort und einem Generator vorausgesetzt wird. Auf der Niederspannungsebene (NS) erzeugt eine oben beschriebene zulässige zeitlich andauernde Asymmetrie (beispielsweise eine verhältnismäßig große Last an einer einzelnen Phase eines Mehrphasensystems) ein quasi-statisches Gegensystem. Das in der DE 10 2007 005 165 A1 vorgeschlagene Verfahren ist nicht optimal auf der Niederspannungsebene (NS) anwendbar, da bei Vorhandensein eines Gegensystems in jedem Fall Kompensationsströme eingespeist werden. Diese Ströme sind bei an sich zulässigen Ungleichgewichten der Spannungsamplituden der einzelnen Phasen in der Niederspannungsebene zum einen nicht notwendig und können eine Asymmetrie in einem Niederspannungs-Versorgungsnetz u. U. sogar noch verstärken. Zudem ist dieses Verfahren durch die ausschließliche Ausrichtung auf dieGegensystemkomponenten nicht in der Lage, symmetrische Netzfehler zu stützen.

Aus der DE 10 2006 054 870 A1 ist ein Verfahren zur Gegensystemregelung einer Windkraftanlage (WEA) bekannt, das im Normalfall den Wirkanteil im Gegensystem minimiert und dessen Blindanteil maximiert Zusätzlich ist ein Netzfehlerdetektor vorgesehen. Im Falle eines Netzfehlers werden mit Hilfe eines Prioritätsmoduls verschiedene Regelungsziele verfolgt, d.h. entweder wird die Wirkleistung maximiert ("Anlagenschonung") oder die Wirk- und Blindanteile des Mit- und Gegensystems werden zur Netzstützung optimiert. Das Optimierungsziel wird dabei über vorher festgelegte Sollwerte einer einzuspeisenden Wirk- oder Blindleistung bestimmt.

Der Artikel "Transient Operation of a Four-Leg Inverter for Autonomous Applications With Unbalanced Load", IEEE Transactions on Power Electronics, Vol. 25, 2010, beschreibt ein Regelverfahren für einen mehrphasigen Wechselrichter, der in einem autonomen Verteilnetz mit einer asymmetrischen Lastverteilung die Netzspannungen erzeugt und kontrolliert, d.h. netzbildend arbeitet und elektrische Leistung einspeist. Bei diesem Verfahren werden Mit- und Gegensystemkomponenten von erfassten Ausgangsspannungen mit fest vorgegebenen Referenzwerten verglichen und anhand des Ergebnisses des Vergleichs Mitsystem- und Gegensystemkomponenten der auszugebenden Ströme bestimmt. Durch die festen Referenzwerte führt jede, insbesondere auch jede sich langsam aufbauende Abweichung der Mit- und/oder Gegensystemkomponenten des Netzzustandes von deren festen Referenzwerten zu einer Reaktion des Regelsystems und damit zu einer Änderung der einzuspeisenden Ströme. Insbesondere erfolgt auch eine nicht gewünschte Reaktion auf zwar von den Referenzwerten des Gegensystems abweichende, ansonsten aber durchaus zulässige Gegensystemkomponenten des Netzzustandes.

Vor dem Hintergrund der oben stehenden Ausführungen stellt sich die Erfindung die Aufgabe, ein Verfahren zu Netzstützung zu schaffen, das auf Niederspannungsebene und/oder auf Mittelspannungsebene eingesetzt werden kann und sowohl flexibel als auch konfigurierbar, ggf. unter Berücksichtigung von Netzrichtlinien, anwendbar ist.

Die Aufgabe wird mit einem Verfahren nach Anspruch 1 gelöst, welches die folgenden Verfahrensschritte aufweist:

- Erfassen eines aktuellen Netzzustandes,
- Zerlegung der erfassten Netzspannungen in Mitsystemkomponenten und in Gegensystemkomponenten,
- Bestimmung vom symmetrischen Mitsystem- und Gegensystemkomponenten eines Kompensationsstromes als Funktionen der Abweichungen der Mitsystem- und Gegensystemkomponenten des Netzzustandes von Referenzwerten, und
- Einspeisen eines Kompensationsstromes als Vektorsumme der so ermittelten symmetrischen Mitsystem- und Gegensystemkomponenten.

Das erfindungsgemäße Verfahren zeichnet sich dadurch aus, dass mindestens einer der Referenzwerte als Mittelwert der jeweiligen symmetrischen Mitsystem- und Gegensystemkomponente des Netzzustandes ermittelt wird. Dabei kann wenigstens einer der Mittelwerte auf besonders robuste Weise über Tiefpassfilter gebildet werden. In dieser Variante ist das Verfahren besonders stabil und wird insbesondere nicht durch etwaige an sich zulässige Asymmetrien des Netzzustandes beeinflusst.

Das erfindungsgemäße Verfahren weist gegenüber den bekannten Verfahren eine Reihe von Vorteilen auf:

Zum einen ermöglicht das erfindungsgemäße Verfahren eine Integration einer großen Anzahl von dezentralen Energieerzeugern (beispielsweise Photovoltaik-Anlagen mit einspeisenden Wechselrichtern) in die existierende Struktur der elektrischen Energieversorgung (d.h. eine Integration in die bestehende Netzstruktur, insbesondere direkt in die bestehende Niederspannungsebene), da es die dezentralen Energieerzeuger in die Lage versetzt, eine richtlinienkonforme netzstützende bzw. netzstabilisierende Funktion auszuführen und zu übernehmen.

Zum anderen ist es mittels des erfindungsgemäßen Verfahrens möglich, das technische Potential von Wechselrichtern zur dynamischen und ggf. statischen Netzstützung zu nutzen, insbesondere bei unsymmetrischen Netzzuständen oder Netzereignissen wie beispielsweise Netzfehlern, wobei auch unterschiedliche Netzrichtlinien berücksichtigt werden können.

Die Netzstützung kann bei Abweichungen vom Optimalzustand auf einer der Versorgungsebenen durch eine gezielte Einspeisung von Kompensationsströmen auf der Niederspannungsebene erfolgen.

Weiterhin berücksichtigt das erfindungsgemäße Verfahren zukünftige Netzrichtlinien, da es zum einen in wesentlichen Teilen adaptiv (selbstanpassend) arbeitet, während zum anderen durch die Richtlinien vorgegebene Sollwerte und andere Parameter in geeigneter Form in dem Verfahren berücksichtigt werden können. Dazu sind entsprechende Parameter in dem Verfahren anpassbar gestaltet und es werden insbesondere auch die für verschiedene Spannungsebenen unterschiedlichen Netzeigenschaften wie die Netzimpedanz berücksichtigt, welche sogar innerhalb einer Netzspannungsebene an verschiedenen Anschlusspunkten unterschiedlich sein kann.

In einer vorteilhaften Ausgestaltung des Verfahrens ist mindestens einer der Referenzwerte als ein einen Optimalzustand des Netzzustands beschreibender Sollwert vorgegeben. Besonders vorteilhaft ist der Sollwert abhängig von Netzeigenschaften, insbesondere von einer Netzimpedanz.

In einer weiteren vorteilhaften Ausgestaltung des Verfahrens erfolgt eine Bestimmung von Nullsystemkomponenten des Kompensationsstromes als Funktionen der Abweichungen der Nullsystemkomponenten des Netzzustandes von Referenzwerten.

Vorteilhafterweise basiert die Bestimmung der symmetrischen Komponenten des Kompensationsstromes auf Real- und/oder Imaginärteilen des Mitsystem- und Gegensystems und ggf. des Nullsystems des Netzzustandes.

Die Berücksichtigung der Realanteile der Mit-, Gegen- und ggf. Nullsystemkomponenten des Kompensationsstrom resultiert in einem Kompensationsstrom mit Blindstromanteilen, die gegenüber der Spannung nacheilen. Dieser ist insbesondere zur Stützung von Netzen mit vorwiegend induktiver Impedanz geeignet, wie zum Beispiel Mittelspannungsnetzen. Die Berücksichtigung auch der Imaginärteile der Mit-, Gegen- und ggf. Nullsystemkomponenten des Kompensationsstroms resultiert in einem Kompensationsstrom, der nicht auf gegenüber der Spannung nacheilende Blindstromanteile beschränkt ist. Somit können nicht nur Netze mit vorwiegend induktiver Impedanz gestützt werden, sondern auch solche Netze, die induktive und resistive Impedanzanteile in einem beliebigen Verhältnis aufweisen. Dieses schließt insbesondere auch Netze mit überwiegend resistiver Impedanz ein, wie beispielsweise Niederspannungsnetze.

Die zur Bestimmung der symmetrischen Komponenten des Kompensationsstromes verwendeten Funktionen sind vorzugsweise Kennlinien, für deren besonders effiziente Beschreibung mindestens die Parameter Steigung und Totband vorgesehen werden. Bevorzugt sind die Kennlinien abhängig von den Netzeigenschaften, insbesondere von der Netzimpedanz. Dabei werden die Netzeigenschaften, insbesondere die Netzimpedanz, besonders bevorzugt von dem Wechselrichter bestimmt.

Weitere vorteilhafte Ausgestaltungen und Weiterbildungen des erfindungsgemäßen Verfahrens sind in den Unteransprüchen gegeben.

Nachfolgend wird die Erfindung unter Bezugnahme auf die beiliegenden Zeichnungen näher beschrieben. Es zeigen:

Fig. 1    beispielhaft eine mit einem Netz verbundene Einrichtung zur Erzeugung elektrischer Energie zur Erläuterung des erfindungsgemäßen Verfahrens,

Fig. 2    ein Blockschaltbild zur Erläuterung eines erfindungsgemäßen Verfahrens in einem ersten Ausführungsbeispiel,

Fig. 3    eine detaillierte Darstellung der Funktionsblöcke 102, 103 aus dem in Fig. 2 gezeigten Blockschaltbild,

Fig. 4    ein Blockschaltbild zur Erläuterung eines erfindungsgemäßen Verfahrens in einem zweiten Ausführungsbeispiel,

Fig. 5    eine detaillierte Darstellung eines ersten Teils der Funktionsblöcke 102, 103, 403, 503 aus dem in Fig. 4 gezeigten Blockschaltbild und

Fig. 6    eine detaillierte Darstellung eines zweiten Teils der Funktionsblöcke 102, 103, 403, 503 aus dem in Fig. 4 gezeigten Blockschaltbild.

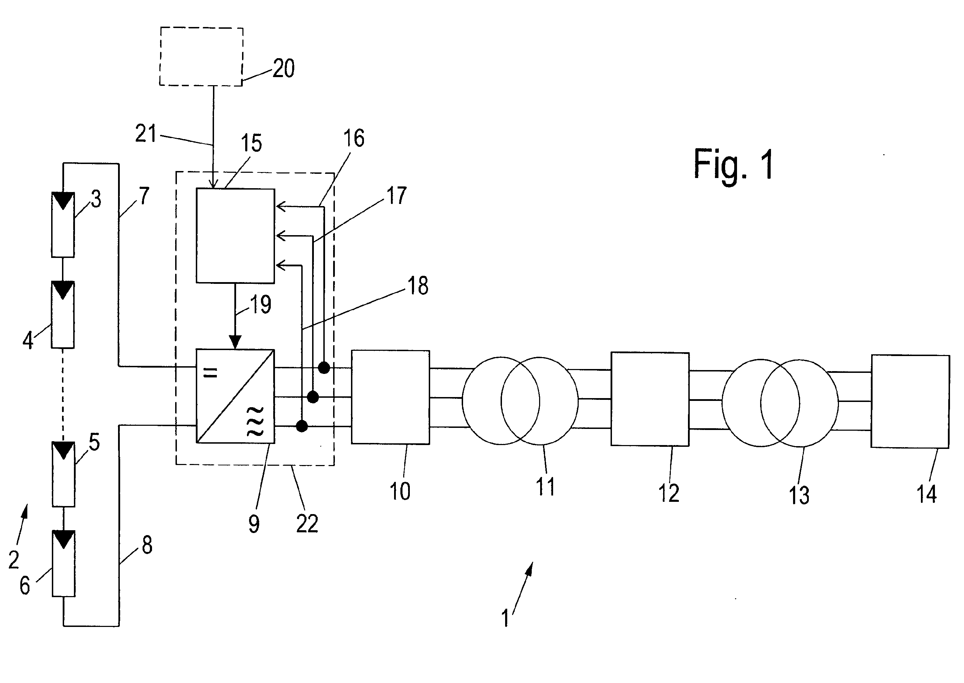

Fig. 1 zeigt eine Einrichtung 1 zur Erzeugung elektrischer Energie.

Es ist ein PV-Generator 2 dargestellt, der eine Anzahl von PV-Modulen 3, 4, 5, 6 aufweist, die entsprechend der bestehenden Anforderungen verschaltet sind.

Der PV-Generator 2 ist über eine positive Gleichstromleitung 7 und eine negative Gleichstromleitung 8 gleichspannungsseitig mit einem Wechselrichter 9 verbunden. Der PV-Generator 2 wandelt eingestrahlte Energie in einen Gleichstrom um, der wiederum von dem Leistungsteil 9 des Wechselrichters 22 in einen oder mehrere einspeisbare Wechselströme umgewandelt wird.

Wechselspannungsseitig ist der Wechselrichter 22 über elektrische Leitungen mit einer Niederspannungsebene (NS) 10 eines elektrischen Netzes zur Versorgung von Verbrauchern mit elektrischer Energie - beispielsweise mit dem öffentlichen Stromnetz - verbunden. Die einzelnen Leitungen der Wechselspannungsseite sind der Übersichtlichkeit halber nicht mit Bezugszeichen versehen. Es handelt sich um eine Darstellung eines dreiphasigen Stromnetzes, dessen drei Phasen üblicherweise mit L1, L2 und L3 bezeichnet werden.

Die Erläuterung der Erfindung erfolgt im Rahmen der vorliegenden Ausführungen beispielhaft an Hand eines dreiphasigen elektrischen Netzes. Selbstverständlich sind diese Ausführungen nicht einschränkend zu verstehen.

Die Niederspannungsebene 10 ist mittels eines Transformators 11 mit einer Mittelspannungsebene 12 des Netzes gekoppelt. Die Mittelspannungsebene 12 ist wiederum mittels eines weiteren Transformators 13 mit einer Hochspannungsebene 14 des Netzes gekoppelt. Die Darstellung des Netzes, seiner Ebenen 10, 12, 14 sowie der Transformatoren 11 und 13 ist stark vereinfacht, der Fachmann ist jedoch mit einem derartigen Netzaufbau vertraut.

Weiterhin ist eine Steuereinrichtung 15 dargestellt. Die Steuereinrichtung 15 ist dazu ausgelegt, die Schritte des erfindungsgemäßen Verfahrens durchzuführen. Die Steuereinrichtung 15 erhält über die Spannungsmessleitungen 16, 17, 18 die erforderlichen Zeitverläufe der Spannungen der jeweiligen Phasen der Niederspannungsebene 10 des Netzes. Ein mit dem Bezugszeichen 19 bezeichneter Pfeil symbolisiert die Ansteuerung des Leistungsteils 9 des Wechselrichters durch die Steuereinrichtung 15 entsprechend des erfindungsgemäßen Verfahrens.

Die Steuereinrichtung 15 kann auch als Teil einer Wechselrichter-Regelung ausgeführt sein und beispielsweise in einem Gehäuse des Wechselrichters 9 angeordnet sein (dies ist durch die mit dem Bezugszeichen 22 versehene gestrichelte Linie dargestellt).

Weiterhin kann ein dargestellter Wechselrichter 9 auch derart ausgeführt sein, dass dieser als eine Kombination aus drei (bei einem drei-phasigen System) jeweils eigenständigen einphasigen Wechselrichtern ohne eine eigene Regelung der Netzstützung ausgeführt ist, also beispielsweise keine eigene FRT-Regelung aufweist (nicht dargestellt). Die eigenständigen Wechselrichter einer derartigen Anordnung würden dann von einer übergeordneten Steuereinrichtung 15 angesteuert.

In einer weiteren Ausführungsform kann eine Anlage eine Vielzahl von PV-Generatoren 2 mit diesen jeweils zugeordneten einphasigen oder dreiphasigen Wechselrichtern 9 aufweisen. Solche größeren Photovoltaik-Anlagen können auch direkt über einen Transformator 11 mit der Mittelspannungsebene 12 verbunden sein, so dass in einem solchen Fall die Niederspannungsebene 10 zumindest nicht in Form eines Versorgungsnetzes vorhanden ist. Hierbei kann diese Anzahl von Wechselrichtern von einer oder mehreren Steuereinrichtungen 15 angesteuert werden.

In einer derartigen Ausführungsform ist es denkbar, dass die Steuereinrichtungen 15 die Regelung der Netzstützung der Wechselrichter 9 direkt übernehmen und/oder dass eine übergeordnete Steuereinrichtung 20 die erforderlichen Spannungsmessungen vornimmt oder die erforderlichen Spannungswerte von einer weiteren (nicht dargestellten) Einrichtung, beispielsweise einer Einrichtung eines Netzbetreibers, erhält - beispielsweise über eine hierzu ausgestaltete Datenverbindung - und die für die Regelung der Netzstützung erforderlichen Parameter (symbolisiert durch Pfeil 21) an die Steuereinrichtung(en) 15 übermittelt. Weiterhin ist denkbar, dass diese für die Regelung der Netzstützung erforderlichen Parameter auch durch weitere Einrichtungen vorgebbar sind, beispielsweise durch einen Netzbetreiber.

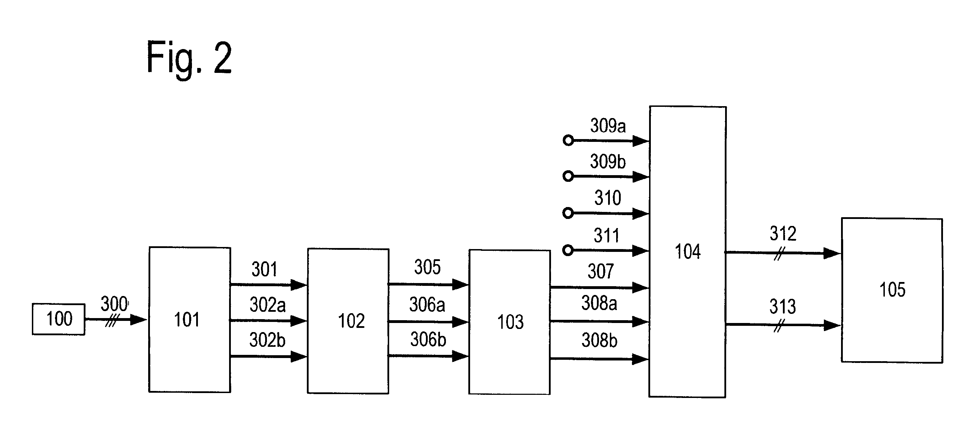

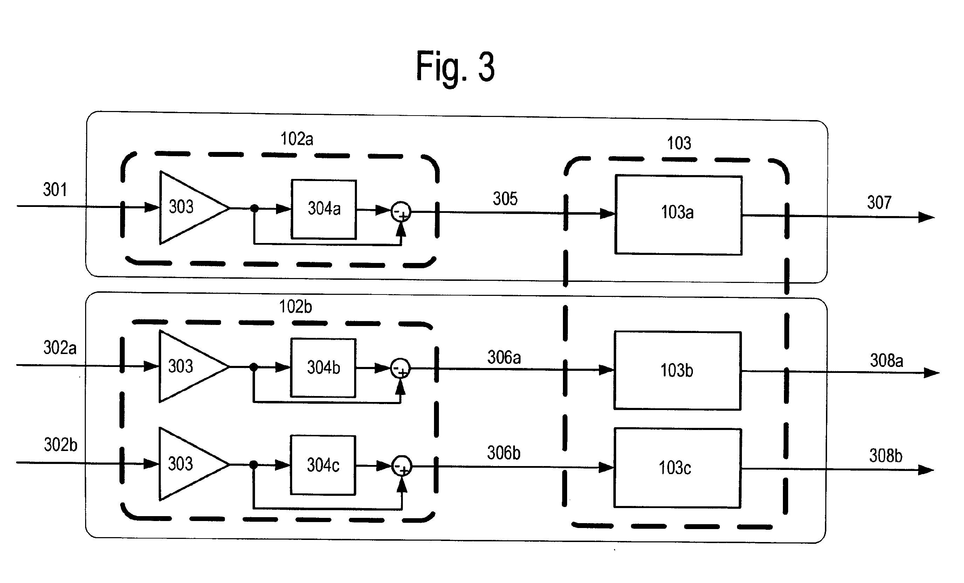

Im Folgenden wird zur dynamischen und/oder statischen Netzstützung ein erstes Ausführungsbeispiel eines Verfahrens vorgeschlagen, dessen Verfahrensschritte in Fig. 2 und 3 jeweils in Form verschieden vereinfachter Ablaufpläne dargestellt sind:

In einem Schritt 100 wird der aktuelle Netzzustand über die Spannungsmessleitungen 16, 17, 18 erfasst und die gemessenen Zeitverläufe 300 der Spannungen der Netzphasen werden ausgegeben.

Die in dem Schritt 100 zur Erfassung des aktuellen Netzzustandes erfassten Zeitverläufe 300 der Netzspannungen werden in einem Schritt 101 in symmetrische Mitsystemkomponenten 301 und in symmetrische Gegensystemkomponenten 302a, 302b transformiert.

Bezüglich der Phasenlage stellt das Mitsystem das Referenzsystem für die Regelung dar, es hat mit anderen Worten eine Phasenlage von null. In einer Phasorendarstellung hat das Mitsystem somit nur einen Realteil und keinen Imaginärteil. In einer dq-Darstellung wäre entsprechend die q-Komponente gleich null. Folglich lässt sich das Mitsystem durch eine einzelne (skalare) Komponente 301 beschreiben. Das Gegensystem kann definitionsgemäß eine von null verschiedene Phasenlage gegenüber dem Mitsystem aufweisen. Zu seiner Darstellung sind daher Real- und Imaginärteil bzw. d- und q-Komponenten notwendig. Folglich wird das Gegensystem durch zwei (skalare) Komponenten 302a und 302b angegeben.

In einem Schritt 102 (vgl. Blöcke 102a und 102b in Fig. 3) werden die in Schritt 101 bestimmten symmetrischen Komponenten 301, 302a, 302b mit einem Kehrwert 303 der vereinbarten Spannung am Netzanschlusspunkt multipliziert und die Abweichungen 305, 306a, 306b der so normierten symmetrischen Komponenten gegenüber vorgegebenen jeweiligen Referenzwerten 304a, 304b, 304c bestimmt. In dem in der Fig. 3 gezeigten Beispiel werden diese Referenzwerte 304a, 304b, 304c über einen in der Figur als Rechteck dargestellten Integrator (Tiefpassfilter) als gleitender Mittelwert aus den Werten der normierten symmetrischen Komponenten gebildet. Der Referenzzustand wird also aus dem soeben zurückliegenden Netzzustand in der Vergangenheit gewonnen, wodurch nur dynamische Änderungen des Netzzustands als Abweichungen erkannt werden. In diesem Sinne ist das in diesem ersten Ausführungsbeispiel gezeigte Verfahren ein Verfahren zur dynamischen Netzstützung. Der Mittelwert wird dabei vorzugsweise über einen Zeitraum gebildet, der (deutlich) länger ist als eine vom Netzbetreiber durch entsprechende Richtlinien vorgegebene Dauer eines zu stützenden Netzfehlers (siehe oben "deutlich kürzer als eine Sekunde"). So könnte beispielsweise der vorstehend erwähnte Zeitraum zum Bilden der Referenzwerte größer als eine Sekunde sein, wenn die vorgegebene Dauer eines zu stützenden Netzfehlers kleiner als 150 Millisekunden ist.

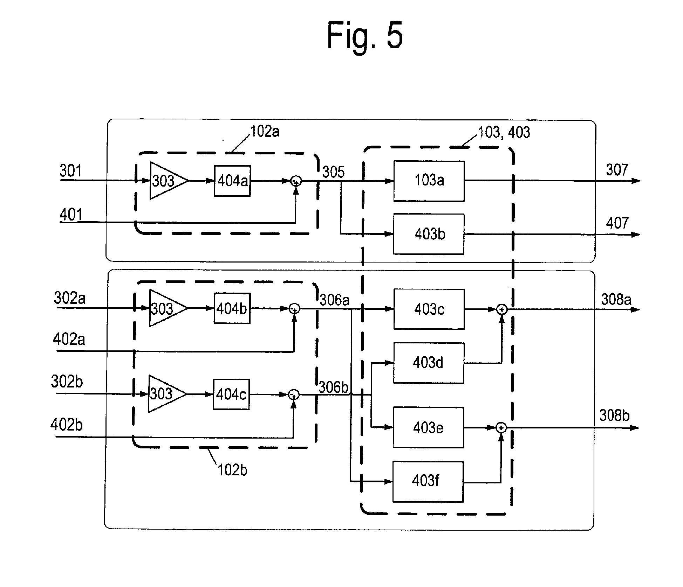

Es versteht sich aber, dass die Referenzwerte 304a, 304b, 304c auch fest oder variabel vorgegeben sein können und den Blöcken 102a, 102b von außen zugeführt werden können und nicht aus dem zurückliegenden Netzzustand bestimmt werden. Dieses ist beispielsweise beim zweiten Ausführungsbeispiel in Fig. 5 realisiert. In einem solchen Fall können auch langsame Abweichungen, sogenannte Drifts, erkannt und kompensiert werden. Ein solches Verfahren wird dann auch als Verfahren zur statischen Netzstützung bezeichnet.

In einem Schritt 103 wird aus den im Schritt 101 bestimmten Abweichungen 305, 306a, 306b eine Anzahl an symmetrischen Komponenten 307, 308a, 308b von Kompensationsströmen unter Berücksichtigung vorgebbarer Kennlinien bestimmt. Im einfachsten Fall sind die Kennlinien durch einen konstanten Faktor gegeben.

In einem Schritt 104 werden die in Schritt 103 ermittelten symmetrischen Komponenten 307, 308a, 308b der Kompensationsströme ggf. unter Einbeziehung des aktuellen PV-Generatorstromes 309a, von Wirkstromvorgaben 309b, statischen Blindstromvorgaben 310 und statischen Vorgaben für Gegensystemkomponenten 311 in Sollwerte 312, 313 für die symmetrischen Komponenten der Einspeiseströme umgewandelt.

Schließlich werden in einem Schritt 105 die in Schritt 104 ermittelten Sollwerte 312, 313 in geeigneter Form über die Ansteuerung 19 an den Leistungsteil 9 eines Wechselrichters 22 übermittelt, so dass dieser erfindungsgemäß gegenüber dem Normalbetrieb ggf. modifizierte Ströme in die Niederspannungsebene 10 oder den direkt in den Transformator 11 einspeist. Folglich wird in Abhängigkeit von dem aktuellen Netzzustand und den Referenzwerten unter Berücksichtigung der vorgebbaren Kennlinien netzstützend bzw. netzstabilisierend - mittels einer Einspeisung von Kompensationsströmen - eingegriffen.

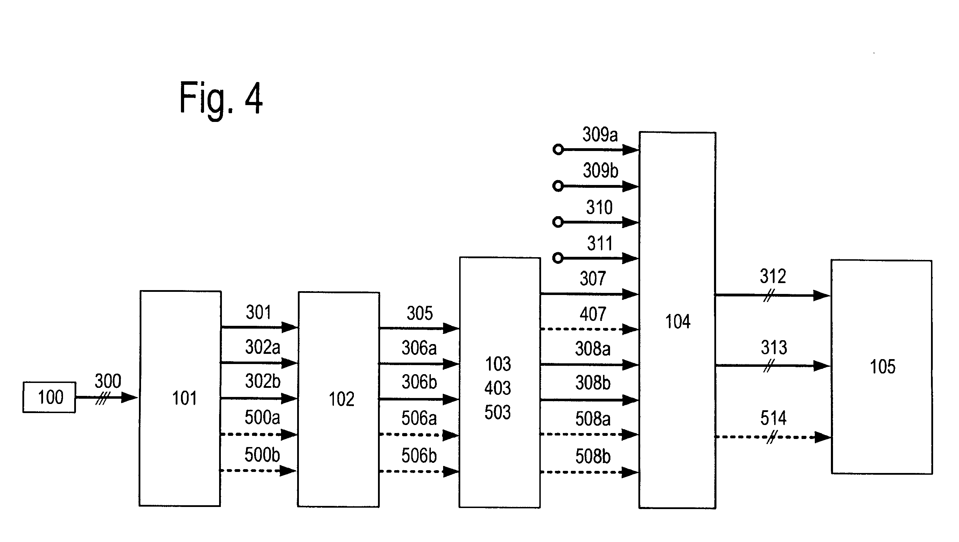

Im Zusammenhang mit den Figuren 4 bis 6 wird im Folgenden ein Verfahren zur Netzstützung in einem zweiten Ausführungsbeispiel näher erläutert. Gleiche Bezugzeichen kennzeichnen dabei gleich oder vergleichbar wirkende Schritte wie in den Figuren 2 und 3.

Ebenso wie bei dem ersten Ausführungsbeispiel (vgl. Fig. 2) werden auch hier (vgl. Fig. 4) in einem ersten Schritt 100 Zeitverläufe 300 der Netzspannungen des aktuellen Netzzustandes erfasst und in einem Schritt 101 in symmetrische Mitsystemkomponenten 301 und in symmetrische Gegensystemkomponenten 302a, 302b transformiert. Zudem wird bei diesem Ausführungsbeispiel zusätzlich das Nullsystem berücksichtigt, indem ein Realteil 500a und ein Imaginärteil 500b der Nullsystemkomponenten ermittelt wird.

Beim ersten Ausführungsbeispiel wurde dann (vgl. Fig. 3) aus dem Realteil 301 der Mitsystemkomponente der Netzspannung unter Berücksichtigung der Kennlinie im Schritt 103a ein Imaginärteil 307 der Mitsystemkomponente des Kompensationsstroms berechnet, welcher im Ergebnis 90° gegenüber der Netzspannung phasenverschoben ist. Auf diese Weise wird im Resultat im Schritt 105 ein nacheilender Kompensationsstrom eingespeist, wodurch sich das Verfahren des ersten Ausführungsbeispiels insbesondere zur Stützung von Netzen eignet, deren Netzimpedanz einen überwiegend induktiven Anteil aufweist, wie beispielsweise Mittelspannungsnetze.

Wie die zu Fig. 3 analoge Fig. 5 des zweiten Ausführungsbeispiels zeigt, wird in diesem aus dem entsprechenden Realteil 301 der Mitsystemkomponente der Netzspannung wiederum der Imaginärteil 307 der Mitsystemkomponente des Kompensationsstroms berechnet, zusätzlich wird unter Berücksichtigung einer weiterer Kennlinie in Block 403b ein Realteil 407 der Mitsystemkomponente des Kompensationsstroms berechnet. Die Soll- oder Referenzwerte 401 (und 402a, 402b, 502a, 502b, siehe unten) sind dabei extern vorgebbar und werden nicht wie beim Ausführungsbeispiel der Fig. 3 aus dem zurückliegenden Netzzustand gewonnen. Das Verfahren ist in der dargestellten Ausführungsform daher insbesondere zur statischen Netzstützung geeignet. Auch Netze, deren Netzimpedanz im Gegensatz zu einem Mittelspannungsnetz keinen überwiegend induktiven Anteil aufweist, sondern von resistiven Anteilen dominiert ist, wie beispielsweise Niederspannungsnetze, können durch das Verfahren in dieser Ausführungsform gestützt werden. Gleichwohl sind Tiefpassfilter 404a, 404b, 404c zur Glättung der Mit- bzw. Gegensystemkomponenten vorgesehen.

Analog werden zur Bestimmung von Realteil 308b und Imaginärteil 308a der Gegensystemkomponente des Kompensationsstroms nun jeweils die normierte Abweichung vom Sollzustand in Realteil 306a und Imaginärteil 306b aus dem entsprechenden Realteil 302a und Imaginärteil 302b der Gegensystemkomponenten der Netzspannung im Vergleich zu den Referenzwerten 402a, 402b bestimmt (Schritt 102b). Aus den normierten Abweichungen vom Sollzustand 306a, 306b werden dann im Schritt 403 "über Kreuz" Realteil 308b und Imaginärteil 308a der Gegensystemkomponente des Kompensationsstroms unter Berücksichtigung vorgebbarer Kennlinien in den Schritten 403c-f ermittelt.

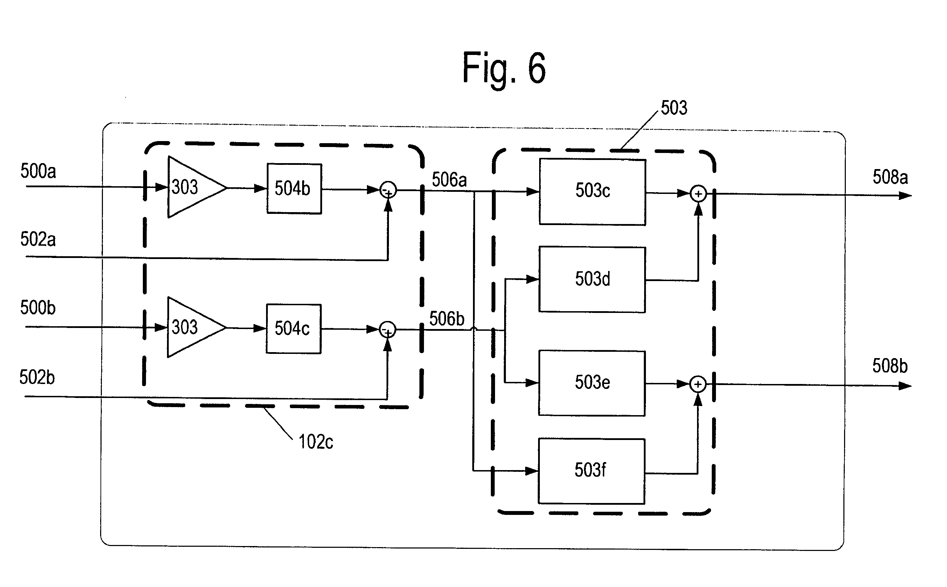

Weiter können optional, wie in Fig. 6 gezeigt, auf gleiche Weise Nullsystemkomponenten 508a, 508b des Kompensationsstroms bestimmt werden. Es werden zunächst jeweils die normierte Abweichung vom Sollzustand in Realteil 506a und Imaginärteil 506b aus dem entsprechenden Realteil 500a und Imaginärteil 500b der Nullsystemkomponenten der Netzspannung im Vergleich zu diesbezüglichen Referenzwerten 502a, 502b bestimmt (Schritt 102c). Aus den normierten Abweichungen vom Sollzustand 506a, 506b werden dann wiederum "über Kreuz" die Nullsystemkomponenten 508a und 508b des Kompensationsstroms unter Berücksichtigung vorgebbarer Kennlinien in den Schritten 503c-f ermittelt. Dieses Verfahren ist insbesondere dann zur statischen Netzstützung geeignet, wenn das Netz als Vier-Leiter-System ausgeführt ist (z.B. sogenannte TN-C-Netze), was regelmäßig auf Niederspannungsebene der Fall ist.

Nachfolgend werden in einem Schritt 104 wiederum wie beim ersten Ausführungsbeispiel die zuvor ermittelten Komponenten ggf. unter Einbeziehung des aktuellen PV-Generatorstromes 309a, von Wirkstromvorgaben 309b, statischen Blindstromvorgaben 310 und statischen Vorgaben für Gegensystemkomponenten 311 in Sollwerte 312, 313 sowie ggf. 514 für die symmetrischen Komponenten der Einsspeiseströme umgewandelt.

Schließlich werden in einem Schritt 105 die in Schritt 104 ermittelten Sollwerte 312, 313 und ggf. 514 in geeigneter Form über die Ansteuerung 19 an den Leistungsteil 9 eines Wechselrichters 22 übermittelt, so dass dieser erfindungsgemäß gegenüber dem Normalbetrieb ggf. modifizierte Ströme in die Niederspannungsebene 10 oder direkt in den Transformator 11 einspeist, wodurch statisch netzstützend bzw. netzstabilisierend eingegriffen wird.

Die Berücksichtigung auch der Imaginärteile der Mit-, Gegen- und ggf. Nullsystemkomponenten des Kompensationsstroms resultiert hierbei in einem Kompensationsstrom, der nicht auf gegenüber der Spannung nacheilende Blindstromanteile beschränkt ist. Somit können nicht nur Netze mit vorwiegend induktiver Impedanz gestützt werden, sondern auch solche Netze, die induktive und resistive Impedanzanteile in einem beliebigen Verhältnis aufweisen. Dieses schließt insbesondere auch Netze mit überwiegend resistiver Impedanz ein, wie beispielsweise Niederspannungsnetze. Die Anpassung des Verfahrens an die Impedanzverhältnisse, konkret an das Verhältnis aus induktiver zu resistiver Impedanz des Netzes, erfolgt dabei über die Kennlinien in den Schritten 103, 403 und ggf. 503.

In Abhängigkeit von den aktuellen Impedanzverhältnissen am Netzanschlusspunkt werden also die Parameter der Kennlinien, insbesondere die Steigung und das Totband, in geeigneter Form modifiziert. Beispielsweise können die Steigungen M der einzelnen Kennlinien in den Blöcken 103, 403 und 503 (vergleiche Fig. 4) folgendermaßen in Abhängigkeit vom Verhältnis des resistiven Anteils R zum reaktiven Anteil X an der Netzimpedanz, die in der Form PHI=atan(X/R) dargestellt werden kann, parametrisiert werden:

$$M(103a) = -\sin(PHI), \quad M(403b) = \cos(PHI)$$

$$M(403c) = \cos(PHI), \quad M(403d) = \sin(PHI)$$

$$M(403e) = \cos(PHI), \quad M(403f) = -\sin(PHI)$$

Daraus folgt, dass für Netze mit überwiegend induktiver Impedanz, z.B. ein MS-Netz mit PHI nahe 90 Grad, M(403b), M(403c) und M(403e) gegen null gehen. Für Netze mit überwiegend resistiver Impedanz, d.h. z.B. NS-Netze mit PHI nahe 0 Grad, gehen M(103a), M(403d) und M(403f) gegen null. Für alle anderen grundsätzlich möglichen Impedanzverhältnisse ergeben sich entsprechende Zwischenwerte.

Analog dazu können die Skalierungsfaktoren für die Kennlinien des Nullsystems in den Blöcken 503c-503f folgendermaßen definiert werden:

$$M(503c) = \cos(PHI), \quad M(503d) = \sin(PHI)$$

$$M(503e) = \cos(PHI), \quad M(503f) = -\sin(PHI)$$

Die aktuellen Netzeigenschaften, insbesondere die Netzimpedanz am Anschlusspunkt, kann auf verschiedene Arten ermittelt oder auch mitgeteilt werden. So kann eine Messung der Netzimpedanz durch den Wechselrichter selbst vorgenommen werden. Alternativ kann eine externe Instanz, beispielsweise der Netzbetreiber, dem Wechselrichter die aktuelle Netzimpedanz mitteilen.

Die Erfindung ist nicht auf die beschriebenen Ausführungsbeispiele beschränkt, die auf vielfache Weise abgewandelt werden können. Insbesondere ist es möglich die genannten Merkmale in anderen als den genannten Kombinationen auszuführen.

Es ist insbesondere denkbar und vorteilhaft, das erfindungsgemäße Verfahren wie folgt auszuführen:

Der Netzzustand kann auch über eine PLL-Regelung verfolgt (beobachtet) werden, indem diese als Eingangswerte die gemessenen Zeitverläufe 300 der Netzspannungen erhält und als Ergebnis die symmetrischen Komponenten 301, 302a, 302b liefert.

Die Referenzwerte 304a, 304b, 304c können zumindest teilweise als skalare Werte vorgegeben werden, wobei vorzugsweise der Referenzwert 304a für den Realteil der Mitsystemkomponente der Netzspannung der vereinbarten Spannung am Netzanschlusspunkt entspricht und/oder die Referenzwerte 304b, 304c gleich null sind.

Die Referenzwerte 304a, 304b, 304c können auch aus den ggf. normierten Zeitverläufen der symmetrischen Komponenten 301, 302a, 302b über Tiefpassfilter gebildet werden, beispielsweise mit individuell pro Komponente definierten Zeitkonstanten.

Ein Fehlerfall kann dadurch definiert werden, dass eine Abweichung von Mit- und Gegensystemkomponenten gegenüber ihren Referenzwerten 304a, 304b, 304c bzw. 401, 402a, 402b, 502a, 502b erkannt wird, welche außerhalb eines (individuell pro Komponente definiertes) Totbandes liegt. Ein solcher Fehlerfall kann als Meldung im Wechselrichter 22 gespeichert werden und/oder über geeignete Kommunikationsmittel an eine übergeordnete Steuereinrichtung 20 und/oder dem Anlagen- und/oder dem Netzbetreiber gemeldet werden.

Die Einspeisung eines Kompensationsstroms kann vorteilhafterweise bereits dann erfolgen, wenn mindestens eine der Abweichungen der symmetrischen Komponenten das Totband der zugehörigen Kennlinie verlassen hat.

Neben den bereits erwähnten linearen Kennlinien, die durch einen Faktor festgelegt sind, können, können die Kennlinien auch mehrdimensional ausgeführt sein, wobei beispielsweise gemessene Parameter des Versorgungsnetzes wie Spannungen und/oder Ströme sowie insbesondere unterschiedliche Netzimpedanzen auf Nieder- oder Mittelspannungsebene unmittelbar berücksichtigt werden. Die in den Schritten 103 und ggf. 403, 503 zur Ermittlung der symmetrischen Komponenten der Kompensationsströme verwendeten Kennlinien können als Tabellen vorgegeben werden, die den Abweichungen der Netzspannungen gegenüber ihren Referenzwerten einzuspeisende Kompensationsströme in besonders vollständiger Weise zuordnen. Die Kennlinien können auch zur Verringerung der Speicherbedarfes parametrisiert werden, wobei es ferner zweckmäßig sein kann, wenn sowohl für die Steigungen der Kennlinien des Mit- und des Gegensystems als auch für das positive und das negative Totband der Kennlinien jeweils getrennte Parameter vorgesehen werden können. Zusätzlich kann zur Verfeinerung unterschieden werden, ob die Kennlinie im Koordinatenursprung mit einer vorgebbaren Steigung beginnt und innerhalb des ggf. vorhandenen Totbandes auf null gesetzt ist oder ob die Kennlinie an der Grenze des Totbandes bei null beginnt und von dort mit der vorgebbaren Steigung ansteigt.

Das "Hochfahren" der Einspeisung eines Kompensationsstroms kann - zur Schonung der Wechselrichterbauteile - insbesondere bei schlagartig eintretenden Abweichungen des Netzzustandes von seinem Referenzzustand und damit einhergehenden schnellen Änderungen der einzuspeisenden Kompensationsströme mit einer definierbaren zeitlichen Charakteristik, insbesondere einer definierbaren maximalen Anstiegsrate erfolgen.

Abhängig von einer vorgebbaren Charakteristik kann nach einer weiteren besonders vorteilhaften Variante die Einspeisung eines Kompensationsstroms für eine vorgebbare Zeit fortgesetzt werden, nachdem der Fehler beendet ist und der Netzzustand in das Totband der Kennlinie zurückgekehrt ist. Dabei kann für diese vorgebbare Zeit zum Erzielen eines besonders optimalen Kompensationsergebnisses eine weitere Kennlinie definiert werden, die insbesondere kein oder ein gegenüber der ursprünglichen Kennlinie modifiziertes Totband enthält.

Nach einer weiteren Variante ist es ferner zweckmäßig, die resultierende Amplitude des Einspeisestroms zur Vermeidung einer Überlastung von Wechselrichterbauteilen auf einen Maximalwert bzgl. der Leistungsabgabe eines Wechselrichters zu begrenzen. Dabei kann eine adaptive Aufteilung der Einspeiseströme erfolgen und zwar an Hand einer vorgebbaren Priorisierung der Begrenzung für die Wirkleistungseinspeisung, Mitsystemkompensation durch Blindleistungseinspeisung und asymmetrischer Gegensystemkompensation (Aufzählung bevorzugt mit aufsteigender Priorität).

Die in den Abbildungen und der Beschreibung gewählte Darstellung der symmetrischen Komponenten als komplexe Größen mit Realteil und Imaginärteil für Mit- und Gegensystem ist beispielhaft zu verstehen. Das Verfahren kann alternativ in verschiedenen dem Fachmann bekannten Koordinatensystemen wie z.B. dq-Koordinaten, alpha-beta-Koordinaten oder auch im Zeitbereich umgesetzt werden.

**Abkürzungen, Bezugzeichen, Verfahrensschritte und Formelzeichen**

| Abkürzung | Bedeutung |
|---|---|
| FRT | "Fault Ride Through" |
| NS | Niederspannungsebene |
| MS | Mittelspannungsebene |
| HS | Hochspannungsebene |

| Bezugszeichen | Bezeichnung |
|---|---|
| 1 | Einrichtung zur Erzeugung und Verteilung elektrischer Energie |
| 2 | Photovoltaik-Generator |
| 3,4,5,6 | Photovoltaik-Module |
| 7,8 | Positive bzw. negative Gleichstromleitung |
| 9 | Leistungsteil eines Wechselrichter |
| 10 | Niederspannungsebene zur Versorgung von Verbrauchern mit elektr. Energie |
| 11, 13 | Transformator |
| 12 | Mittelspannungsebene eines elektrischen Verteilnetzes |
| 14 | Hochspannungsebene eines elektrischen Verteilnetzes |
| 15 | Steuerungseinrichtung |
| 16,17,18 | Spannungsmessleitungen |
| 19 | Ansteuerung |
| 20 | Steuerungseinrichtung |
| 21 | Ansteuerung |
| 22 | Wechselrichter |

| Verfahrensschritt | Beschreibung |
|---|---|
| 100 | Erfassung der Zeitverläufe der Netzspannungen |
| 101 | Transformation der Netzspannung in symmetrische Komponenten |
| 102 | Bestimmung von normierten Änderungen der symmetrischen Komponenten |
| 102a | Bestimmung von normierten Änderungen der Mitsystem-Komponenten |
| 102b | Bestimmung von normierten Änderungen der Gegensystem-Komponenten |
| 102c | Bestimmung von normierten Änderungen der Nullsystem-Komponenten |
| 103 | Bestimmung von Kompensationsströmen in symmetrischen Komponenten |
| 103a | Bestimmung des Imaginärteils der Mitsystem-Kompensationsströme |
| 103b | Bestimmung des Imaginärteils der Gegensystem-Kompensationsströme |
| 103c | Bestimmung des Realteils der Gegensystem-Kompensationsströme |
| 104 | Einbeziehung von Wirkstromvorgaben und statischen Blindstromvorgaben sowie Strombegrenzung und Priorisierung |
| 105 | Ausgabe von Sollwerten für die Einspeiseströme |

| Formel-Zeichen | Bezeichnung |
|---|---|
| 300 | Gemessene Zeitverläufe der Netzspannungen [Volt] |
| 301 | Realteil der Mitsystemkomponenten der Netzspannung [Volt] |
| 302a | Realteil der Gegensystemkomponenten der Netzspannung [Volt] |
| 302b | Imaginärteil der Gegensystemkomponente der Netzspannung [Volt] |
| 303 | Kehrwert der vereinbarten Spannung am Netzanschlusspunkt [Volt$^{-1}$] |
| 304a | Referenzwert für Realteil der Mitsystemkomponenten |

(fortgesetzt)

| Formel-Zeichen | Bezeichnung |
|---|---|
| 304b | Referenzwert für Realteil der Gegensystemkomponenten |
| 304c | Referenzwert für Imaginärteil der Gegensystemkomponenten |
| 305 | Normierte Abweichung des Realteils der Mitsystemkomponenten |
| 306a | Normierte Abweichung des Realteils der Gegensystemkomponenten |
| 306b | Normierte Abweichung des Imaginärteils der Gegensystemkomponenten |
| 307 | Imaginärteil der Mitsystemkomponenten des Kompensationsstromes [Amp] |
| 308a | Imaginärteil der Gegensystemkomponenten des Kompensationsstromes [Amp] |
| 308b | Realteil der Gegensystemkomponenten des Kompensationsstromes [Amp] |
| 309a | Aktueller PV-Generatorstrom [Amp] |
| 309b | Statische Wirkstromvorgabe [Amp] |
| 310 | Statische Blindstromvorgabe [Amp] |
| 311 | Statische Gegensystemvorgabe [Amp] |
| 312 | Sollwerte für die Mitsystemkomponenten des Einspeisestroms [Amp] |
| 313 | Sollwerte für die Gegensystemkomponenten des Einspeisestroms [Amp] |
| 401 | Referenzwert für Realteil der Mitsystemkomponenten |
| 402a | Referenzwert für Realteil der Gegensystemkomponenten |
| 402b | Referenzwert für Imaginärteil der Gegensystemkomponenten |
| 403 | Bestimmung von Kompensationsströmen in Mit-/Gegensystem-Komponenten |
| 403b | Bestimmung des Realteils der Mitsystem-Kompensationsströme |
| 403c | Bestimmung eines ersten Anteils des Imaginärteils der Gegensystem-Kompensationsströme |
| 403d | Bestimmung eines zweiten Anteils des Imaginärteils der Gegensystem-Kompensationsströme |
| 403e | Bestimmung eines ersten Anteils des Realteils der Gegensystem-Kompensationsströme |
| 403f | Bestimmung eines zweiten Anteils des Realteils der Gegensystem-Kompensationsströme |
| 404a-c | Tiefpassfilter |
| 407 | Realteil der Mitsystemkomponenten des Kompensationsstromes [Amp] |
| 500a | Realteil der Nullsystemkomponenten der Netzspannung [Volt] |
| 500b | Imaginärteil der Nullsystemkomponenten der Netzspannung [Volt] |
| 502a | Referenzwert für Realteil der Nullsystemkomponenten |
| 502b | Referenzwert für Imaginärteil der Nullsystemkomponenten |
| 503 | Bestimmung von Kompensationsströmen in Nullsystem-Komponente |
| 503c | Bestimmung eines ersten Anteils des Imaginärteils der Nullsystem-Kompensationsströme |
| 503d | Bestimmung eines zweiten Anteils des Imaginärteils der Nullsystem-Kompensationsströme |
| 503e | Bestimmung eines ersten Anteils des Realteils der Nullsystem-Kompensationsströme |
| 503f | Bestimmung eines zweiten Anteils des Realteils der Nullsystem-Kompensationsströme |
| 504b-c | Tiefpassfilter |
| 506a | Normierte Abweichung des Realteils der Nullsystemkomponenten |
| 506b | Normierte Abweichung des Imaginärteils der Nullsystemkomponenten |
| 508a | Imaginärteil der Nullsystemkomponenten des Kompensationsstromes [Amp] |
| 508b | Realteil der Nullsystemkomponenten des Kompensationsstromes [Amp] |
| 514 | Sollwerte für die Nullsystemkomponenten des Einspeisestroms [Amp] |

**Patentansprüche**

1. Verfahren zur Netzstützung mittels eines Wechselrichters, wobei eine Netzstützung durch ein Einspeisen von Kompensationsströmen erfolgt, aufweisend die folgenden Schritte:

   - Erfassen eines aktuellen Netzzustandes (Schritt 100),
   - Zerlegen der zur Erfassung des aktuellen Netzzustandes erfassten Spannungen in Mitsystem- und in Gegensystemkomponenten (Schritt 101),
   - Bestimmung von symmetrischen Mitsystem- und Gegensystemkomponenten eines Kompensationsstromes als Funktionen der Abweichungen der Mitsystem- und Gegensystemkomponenten des Netzzustandes von Referenzwerten (Schritte 102, 103,403), und
   - Einspeisen eines Kompensationsstromes als Vektorsumme der so ermittelten symmetrischen Mitsystem- und Gegensystemkomponenten, **dadurch gekennzeichnet, dass**

   mindestens einer der Referenzwerte als Mittelwert der jeweiligen symmetrischen Mitsystem- und Gegensystemkomponente des Netzzustandes ermittelt wird.

2. Verfahren nach Anspruch 1, **dadurch gekennzeichnet, dass** mindestens einer der Mittelwerte über Tiefpassfilter gebildet wird.

3. Verfahren nach Anspruch 1 oder 2, **dadurch gekennzeichnet, dass** eine Bestimmung von Nullsystemkomponenten des Kompensationsstromes als Funktionen der Abweichungen der Nullsystemkomponenten des Netzzustandes von Referenzwerten (Schritt 102c, 503) erfolgt.

4. Verfahren nach einem der Ansprüche 1 bis 3, **dadurch gekennzeichnet, dass** die Bestimmung der symmetrischen Komponenten des Kompensationsstromes auf Real- und/oder Imaginärteilen des Mitsystems und des Gegensystems sowie ggf. des Nullsystems des Netzzustandes basiert.

5. Verfahren nach einem der Ansprüche 1 bis 4, **dadurch gekennzeichnet, dass** die zur Bestimmung der symmetrischen Komponenten des Kompensationsstromes verwendeten Funktionen Kennlinien sind, für deren Beschreibung mindestens die Parameter Steigung und Totband vorgesehen werden.

6. Verfahren nach Anspruch 5, **dadurch gekennzeichnet, dass** die Kennlinien abhängig von den Netzeigenschaften, insbesondere von der Netzimpedanz, sind, wobei die Netzeigenschaften, insbesondere die Netzimpedanz, von dem Wechselrichter bestimmt wird.

7. Verfahren nach Anspruch 5 oder 6, **dadurch gekennzeichnet, dass** für das positive und das negative Totband der Kennlinien getrennte Parameter vorgesehen werden und/oder dass für die Kennlinien der Mit- und Gegensystemkomponenten und ggf. der Nullsystemkomponenten getrennte Parameter vorgesehen werden.

8. Verfahren nach einem der Ansprüche 5 bis 7, **dadurch gekennzeichnet, dass** die Einspeisung eines Kompensationsstroms nach Verlassen des Totbandes von mindestens einer der Kennlinien der symmetrischen Komponenten erfolgt.

9. Verfahren nach einem der Ansprüche 1 bis 8, **dadurch gekennzeichnet, dass** eine definierbare Anstiegsrate des Kompensationsstroms vorgesehen ist.

10. Verfahren nach einem der Ansprüche 1 bis 9, **dadurch gekennzeichnet, dass** die Einspeisung eines Kompensationsstroms abhängig von einer vorgebbaren Kennlinie für eine vorgebbare Zeitdauer fortgesetzt wird, nachdem der Netzzustand in das Totband zurückgekehrt ist.

11. Verfahren nach einem der Ansprüche 1 bis 10, **dadurch gekennzeichnet, dass** für den Wechselrichter mögliche Einspeiseströme begrenzt werden können, wobei eine adaptive Aufteilung der maximal möglichen Einspeiseströme an Hand einer vorgebbaren Priorisierung der Begrenzungen der Wirkleistungseinspeisung, der Mitsystemkompensation durch Blindleistungseinspeisung und der asymmetrischen Gegensystemkompensation erfolgt.

12. Verfahren nach einem der Ansprüche 1 bis 11, **dadurch gekennzeichnet, dass** Vorgaben eines Netzbetreibers für statische Blindströme und/oder statische Gegensystemkomponenten berücksichtigt werden.

**Claims**

1.  A method for grid support by means of an inverter, wherein the grid is supported by feeding in compensation currents, comprising the following steps:

    - measuring a prevailing grid state (step 100);
    - breaking down voltages measured for measuring the prevailing grid state into positive sequence system components and negative sequence system components (step 101);
    - determining symmetrical positive sequence system components and negative sequence system components of a compensation current as functions of deviations of the positive sequence system components and negative sequence system components of the grid state from reference values (steps 102, 103, 403); and
    - feeding-in a compensation current as the vector sum of the thus determined symmetrical positive sequence system components and negative sequence system components,

    **characterized in that**
    at least one of the reference values is determined as an average value of the respective symmetrical positive sequence system components and negative sequence system components of the grid state.

2.  The method according to claim 1, **characterized in that** at least one of the average values is formed via low-pass filters.

3.  The method according to claim 1 or 2, **characterized in** determining zero sequence system components of the compensation current as functions of the deviations of zero sequence system components of the grid state from reference values (steps 102c, 503).

4.  The method according to one of the claims 1 to 3, **characterized in that** the determination of the symmetrical components of the compensation current is based on real and/or imaginary parts of the positive sequence system and the negative sequence system and selectively the zero sequence system of the grid state.

5.  The method according to one of the claims 1 to 4, **characterized in that** functions used for determining the symmetrical components of the compensation current are droop functions, wherein at least the parameters "slope" and "dead band" are provided for the description of the droop functions.

6.  The method according to claim 5, **characterized in that** the droop functions are dependent on properties of the grid, in particular on the grip impedance, wherein the properties of the grid, in particular the grid impedance, are determined by the inverter.

7.  The method according to claim 5 or 6, **characterized in that** separate parameters for a positive dead band and a negative dead band of the droop function and/or separate parameters for the droop functions for the positive sequence system components and the negative sequence system components and selectively the zero sequence system components are provided.

8.  The method according to one of the claims 5 to 7, **characterized in that** feeding in the compensation current is effected after leaving the dead band of at least one of the droop functions.

9.  The method according to one of the claims 1 to 8, **characterized in that** a definable slew rate of the compensation current is provided.

10. The method according to one of the claims 1 to 9, **characterized in that** the feeding-in of the compensation current is continued depending on a specifiable droop function for a specifiable time after the grid state has returned into a dead band.

11. The method according to one of the claims 1 to 10, **characterized in that** a maximum feed-in current is limited to a current that the inverter is able to supply, wherein the maximum feed-in current is distributed adaptively based on a prioritization of the limits for fed-in active power, the positive sequence system compensation by feeding in reactive power and an asymmetrical negative sequence system compensation.

12. The method according to one of the claims 1 to 11, **characterized in that** requirements of a grid operator for static reactive currents and/or static negative sequence system components are taken into account in the method.

**Revendications**

1. Procédé d'assistance du réseau au moyen d'un onduleur, une assistance du réseau s'effectuant par une injection de courants de compensation, présentant les étapes suivantes :

- détection d'un état actuel du réseau (étape 100),
- décomposition des tensions détectées pour la détection de l'état actuel du réseau en composantes de système direct et de système inverse (étape 101),
- détermination des composantes de système direct et de système inverse symétriques d'un courant de compensation en fonction des écarts entre les composantes de système direct et de système inverse de l'état du réseau et des valeurs de référence (étapes 102, 103, 403) et
- injection d'un courant de compensation sous la forme d'un total vectoriel des composantes de système direct et de système inverse symétriques ainsi déterminées,

**caractérisé en ce que**
au moins l'une des valeurs de référence est déterminée comme étant la valeur moyenne des composantes de système direct et de système inverse symétriques respectives de l'état du réseau.

2. Procédé selon la revendication 1, **caractérisé en ce qu'**au moins l'une des valeurs moyennes est formée par le biais d'un filtre passe-bas.

3. Procédé selon la revendication 1 ou 2, **caractérisé en ce qu'**une détermination des composantes de système homopolaire du courant de compensation est effectuée sous la forme de fonctions des écarts entre les composantes de système homopolaire de l'état du réseau et les valeurs de référence (étape 102c, 503).

4. Procédé selon l'une des revendications 1 à 3, **caractérisé en ce que** la détermination des composantes symétriques du courant de compensation se base sur les parties réelles et/ou imaginaires du système direct et du système inverse ainsi qu'éventuellement du système homopolaire de l'état du réseau.

5. Procédé selon l'une des revendications 1 à 4, **caractérisé en ce que** les fonctions utilisées pour la détermination des composantes symétriques du courant de compensation sont des courbes caractéristiques pour la description desquelles sont au moins prévus les paramètres pente et bande morte.

6. Procédé selon la revendication 5, **caractérisé en ce que** les courbes caractéristiques dépendent des caractéristiques du réseau, notamment de l'impédance du réseau, les caractéristiques du réseau, notamment l'impédance du réseau, étant définies par l'onduleur.

7. Procédé selon la revendication 5 ou 6, **caractérisé en ce que** des paramètres séparés sont prévus pour la bande morte positive et négative des courbes caractéristiques et/ou **en ce que** des paramètres séparés sont prévus pour les courbes caractéristiques des composantes de système direct et de système inverse et éventuellement des composantes de système homopolaire.

8. Procédé selon l'une des revendications 5 à 7, **caractérisé en ce que** l'injection d'un courant de compensation s'effectue après avoir quitté la bande morte d'au moins l'une des courbes caractéristiques des composantes symétriques.

9. Procédé selon l'une des revendications 1 à 8, **caractérisé en ce qu'**il est prévu un taux de croissance pouvant être défini du courant de compensation.

10. Procédé selon l'une des revendications 1 à 9, **caractérisé en ce que** l'injection d'un courant de compensation en fonction d'une courbe caractéristique pouvant être prédéfinie est poursuivie pendant une durée pouvant être prédéfinie après que l'état du réseau soit revenu dans la bande morte.

11. Procédé selon l'une des revendications 1 à 10, **caractérisé en ce que** les courants d'injection possibles pour l'onduleur peuvent être limités, une répartition adaptative des courants d'injection maximums possibles étant effectuée au moyen d'une attribution de priorités pouvant être prédéfinies des limitations de l'injection de puissance active, de la compensation de système direct par injection de puissance réactive et de la compensation de système inverse.

12. Procédé selon l'une des revendications 1 à 11, **caractérisé en ce que** des instructions de l'opérateur du réseau sont prises en compte pour les courants réactifs statiques et/ou les composantes de système indirect statiques.

Fig. 1

EP 2 614 573 B1

EP 2 614 573 B1

# Fig. 2

# Fig. 3

Fig. 4

# Fig. 5

# Fig. 6

EP 2 614 573 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007005165 A1

- DE 102006054870 A1


**In der Beschreibung aufgeführte Nicht-Patentliteratur**

- **HEUCK.** Elektrische Energieversorgung. Vieweg Verlag, 2007

- Transient Operation of a Four-Leg Inverter for Autonomous Applications With Unbalanced Load. *IEEE Transactions on Power Electronics,* 2010, vol. 25